# EUROPÄISCHE PATENTSCHRIFT

(11) **EP 1 188 002 B1**
(45) Veröffentlichungstag und Bekanntmachung des Hinweises auf die Patenterteilung: **27.11.2002**
(21) Anmeldenummer: 00942080.3
(22) Anmeldetag: 16.06.2000
(51) Int. Cl.: F16H 1/46

(54) **PLANETENGETRIEBE**
PLANETARY GEAR
BOITE PLANETAIRE

(30) Priorität: 21.06.1999 DE 19928385
(43) Veröffentlichungstag der Anmeldung: 20.03.2002
(73) Patentinhaber: ZF FRIEDRICHSHAFEN Aktiengesellschaft, 88038 Friedrichshafen (DE)
(72) Erfinder: SCHULZ, Horst, D-88045 Friedrichshafen (DE)
(86) Internationale Anmeldenummer: EP0005545
(87) Internationale Veröffentlichungsnummer: WO00079149

(56) Entgegenhaltungen:
- DE-A- 4 325 295
- DE-A- 19 510 499
- DE-A- 19 525 831
- DE-A- 19 720 255
- DE-A- 19 756 967

## Beschreibung

Die Erfindung betrifft ein Planetengetriebe mit einem angetriebenen Sonnenrad, mit zwei innenverzahnten Hohlrädern, von denen eines feststeht und das andere drehantreibbar gelagert ist und den Abtrieb bildet. Es sind mehrere Planetenräder vorgesehen, die in einem Planetenträger gelagert sind. Die Planetenräder stehen in ständigem Zahneingriff mit dem Sonnenrad und den Hohlrädern.

Viele Aufgabenstellungen in der Antriebstechnik verlangen die Realisierung extremer Übersetzungen. Planetengetriebe sind besonders gut geeignet, hohe Übersetzungen mit einer kompakten Bauweise zu vereinen. Ein derartiges Planetengetriebe stellt das Wolfrom-Koppelgetriebe dar, das bei einer hohen Übersetzung noch gute Wirkungsgrade aufweist. Als Wolfrom-Getriebe bezeichnet man ein besonderes, einfaches Koppelgetriebe. Der Antrieb ist mit einem Sonnenrad verbunden, das mit einem Planetenräderblock zusammenarbeitet. Jedes Planetenrad stützt sich an dem innenverzahnten Hohlrad ab, das gehäusefest ist. Der Steg als Planetenträger läuft leer mit. Die Bewegung wird über den Planetenträger und das/die Planetenrad/-räder weitergeleitet. Jedes Planetenrad ist seinerseits wieder mit einem innenverzahnten Hohlrad in Eingriff, das den Abtrieb bildet. Die beschriebene Anordnung eignet sich für eine kompakte Bauweise, die auf engem Raum hohe Übertragungsdichten ermöglicht (vgl. Klein: "Theoretische Grundlagen zum Auslegen von Wolfrom-Koppelgetrieben", Maschinenmarkt 1982, Seiten 341 bis 344).

Insbesondere in der Handhabungstechnik werden zur Leistungsübertragung von hochtourigen Antriebsmotoren hoch untersetzende Getriebe benötigt. Einen Anwendungsfall stellen Industrieroboter dar, bei denen Planetengetriebe eingesetzt werden. Für die Präzision eines Industrieroboters kommt dem Planetengetriebe eine zentrale Bedeutung zu. Es müssen präzise Bewegungsabläufe mit höchster Wiederholgenauigkeit gewährleistet sein. Für ein derartiges Planetengetriebe sind insbesondere folgende Kriterien von Bedeutung:
- geringes, einstellbares Verdrehspiel,
- hohe Steifigkeit,
- hoher Wirkungsgrad,
- niedrige Wärmeentwicklung,
- geringe Vibration und
- eine hohe Laufruhe.

Für Getriebe, die in höheren Stückzahlen gefertigt werden, hat sich gezeigt, daß die Art und Weise der Verzahnungsspieleinstellung einen entscheidenden Einfluß auf die Herstellkosten hat.

Die DE 43 25 295 A1 zeigt zwei unterschiedliche Bauformen von Wolfrom-Getrieben mit geneigten Planetenradachsen, wobei eine Bauform zwei Hohlräder mit konischen Verzahnungsbereichen gleicher Konusrichtung und durchgehend zylindrisch verzahnte Planetenräder zeigt, und die andere Bauform zwei Hohlräder mit zylindrischen Verzahnungsbereichen und durchgehend konisch verzahnten Planetenrädern. Die Verzahnungsspieleinstellung ist bei diesen Bauformen relativ aufwendig, da an insgesamt drei Stellen Einstellscheiben vorgesehen sind, welche bei der Montage in entsprechender Dicke verbaut werden. Wird bei einem fertig montierten Getriebe beim Funktionslauf ein nichtoptimales Spielverhalten festgestellt, so hat das einen sehr hohen Demontageaufwand zur Folge.

Die DE 195 25 831 A1 zeigt ein Wolfrom-Getriebe, bei welchem die beiden Hohlräder konische Verzahnungsbereiche mit zueinander entgegengesetzter Konusrichtung aufweisen. Die Planetenräder sind als Stufenräder mit zwei konischen Verzahnungsbereichen ausgebildet, deren Konusrichtungen ebenfalls zueinander entgegengesetzt verlaufen. Die Planetenradachsen verlaufen parallel zur Getriebehauptachse. Zur Verzahnungsspieleinstellung ist bei diesem Getriebe eine Einstellscheibe großen Durchmessers vorgesehen. Für die Montage muß diese große und teure Einstellscheibe in verschiedenen Dicken bevorratet sein, was sich negativ auf die Herstellkosten auswirkt. Diese großen Einstellscheiben sind auch deshalb teuer, weil sie nicht nur ein sehr genaues Dickenmaß aufweisen müssen, sondern darüber hinaus auch zahlreiche Bohrungen aufweisen.

Schließlich zeigt die nicht vorveröffentlichte DE 197 56 967 A1 der Anmelderin ein Wolfrom-Getriebe, bei welchem die Verzahnungsbereiche der beiden Hohlräder entgegengesetzte Konusrichtung aufweisen und die Konuswinkel unterschiedlich groß sind. Die Planetenräder dieses Getriebes weisen zwei konische Verzahnungsbereiche gleicher Zähnezahl und mit entgegengesetzter Konusrichtung auf, welche ohne Versatz ineinander übergehen. Bei diesem einfacher herstellbaren Getriebe können die Planetenradachsen der doppelkonisch ausgebildeten Planetenräder um einen Neigungswinkel geneigt sein, um die Unterschiede in den Betriebseingriffwinkeln der beiden Hohlradeingriffe zu verringern. Zur Verzahnungsspieleinstellung ist jedoch auch bei diesem Getriebe eine teure Einstellscheibe großen Durchmessers notwendig.

Ausgehend von dem gattungsbildenden Stand der Technik nach der DE 195 25 831 A1 liegt der Erfindung daher die Aufgabe zugrunde, ein Planetengetriebe der Wolfrom-Bauart zu schaffen, bei welchem die Verzahnungsspieleinstellung mit geringerem Montage- und Kostenaufwand erfolgen kann. Außerdem soll das Getriebe bei gleicher oder höherer Übertragungstreue unempfindlich sein gegenüber unvermeidlichen fertigungsbedingten Abweichungen.

Diese Aufgabe wird mit einem, auch die kennzeichnenden Merkmale des Hauptanspruches aufweisenden, gattungsgemäßen Planetengetriebe gelöst. Bevorzugte bauliche Ausgestaltungen sind den Unteransprüchen zu entnehmen.

Bei dem erfindungsgemäßen Getriebe wirkt sich vorteilhaft auf die Herstellkosten aus, daß zur Verzahnungsspieleinstellung der beiden Verzahnungsbereiche der Planetenräder mit den beiden Hohlrädern nur eine Einstellscheibe geringen Durchmessers erforderlich ist. Die Verzahnungsspieleinstellung erfolgt durch axiale Einstellung des Planetenträgers, wofür ein kleines Planetenträgerlager ausreichend ist. Ein Mittenversatz oder ein Rundlauffehler der Hohlräder wird während des Betriebs durch eine axiale Bewegung des doppelkonischen Planetenräder entlang ihrer Planetenachsen ausgeglichen. Ohne die Gefahr des Verklemmens und ohne Übertragungsfehler hinnehmen zu müssen, können größere Fertigungs- und Montagetoleranzen der Hohlräder, wie z. B. Härteverzug, Teilungsfehler, Rundlauffehler zugelassen werden.

In einer vorteilhaften Ausgestaltung sind die Konuswinkel der beiden Verzahnungsbereiche der Planetenräder so gewählt, daß die aus der Konizität herrührenden Axialkräfte im wesentlichen ausgeglichen sind. Am Planetenrad bzw. an den einzelnen Planetenrädern stellt sich im Betrieb automatisch eine axiale Mittenposition ein, bei der sich das geringe, noch vorhandene Verzahnungsspiel automatisch gleichmäßig auf die beiden Zahneingriffe mit den Hohlrädern verteilt.

Das erfindungsgemäße Getriebe kann gerad- oder schrägverzahnt ausgeführt werden. Wenn die Planetenräder schrägverzahnt ausgeführt sind, was in bezug auf Lauf- und Geräuschverhalten vorteilhaft ist, weisen die beiden Verzahnungsbereiche jedes Planetenrads vorteilhafterweise gleichen Richtungssinn und etwa gleiche Steigungsmaße auf, so daß die aus der Schrägverzahnung herrührenden Axialkräfte auf die Planetenräder ebenfalls im wesentlichen ausgeglichen sind.

Durch eine Anordnung des Planetenträgerlagers in axialem Abstand vom Hohlrad mit annähernd zylindrischen Verzahnungsbereich wird eine Lagerbasis geschaffen, die unerwünschte Kippbewegungen des Planetenträgers abstützt.

Eine günstige konstruktive Gesamtanordnung wird erzielt, wenn das den Abtrieb bildende Hohlrad konisch und das feststehende Hohlrad annähernd zylindrisch ausgebildet ist.

In einer weiteren vorteilhaften Ausgestaltung entspricht der Achsneigungswinkel der Planetenachsen in etwa dem Wert des Konuswinkels des gleichzeitig mit dem konischen Hohlrad und dem Sonnenrad in Eingriff stehenden konischen Verzahnungsbereichs des Planetenrads. Die Zahnflanken der Planetenräder im Eingriffspunkt mit dem Sonnenrad verlaufen dann annähernd parallel zu einer Getriebehauptachse. Dementsprechend ist ein Sonnenrad mit zumindest annähernd zylindrischem Verzahnungsbereich vorgesehen. Die Axialposition des Sonnenrads bleibt ohne große Auswirkungen auf das Verzahnungsspiel. Dementsprechend ist keine genaue Einstellung dieser Axialposition des Sonnenrads erforderlich, wodurch eine einfachere und kostengünstigere Montage ermöglicht wird. Diese Ausgestaltung ist besonders dann vorteilhaft, wenn das Sonnenrad direkt auf einer Welle eines Antriebsmotors angeordnet ist.

In einer besonders vorteilhaften Ausführungsform weisen die Verzahnungsbereiche der beiden Hohlräder und die Verzahnungsbereiche der Planetenräder gleiche Moduln auf. Die beiden Verzahnungsbereiche der Planetenräder sind durch entsprechende Wahl der Profilverschiebungs-Faktoren hinsichtlich der effektiven Flankendurchmesser so aufeinander abgestimmt, daß die Zahnflanken der Verzahnungsbereiche der Planetenräder ohne Versatz ineinander übergehen. Da die angrenzenden Endbereiche der Verzahnungsbereiche der Planetenräder mit einem Knick, jedoch ohne Versatz, ineinander übergehen, können sie mit hoher Präzision einfacher hergestellt werden. Die Zähne sind stabil und tragfähig, so daß die axiale Erstreckung reduziert werden kann, wodurch das ganze Getriebe kürzer, steifer und vibrationsärmer wird.

In bezug auf die Verzahnungsgeometrie ist bei gleichen Moduln der beiden Hohlräder besonders vorteilhaft, wenn das Hohlrad mit annähernd zylindrischem Verzahnungsbereich die größere Zähnezahl aufweist.

Die Herstellung des Hohlrads mit konischem Verzahnungsbereich wird vereinfacht, wenn es eine große zentrale Öffnung aufweist. Es können dann bei der Bearbeitung Schleifscheiben größeren Durchmessers verwendet werden. Der Durchmesserunterschied zwischen dieser Öffnung und dem Planetenträgerlager kann vorteilhafterweise durch einen Lagerflansch überbrückt werden.

Zur Einstellung der Axialposition des Planetenträgers gegenüber dem Hohlrad mit konischem Verzahnungsbereich kann als Einstellmittel beispielsweise eine Einstellscheibe für die Verzahnungsspieleinstellung verwendet werden. Ist das Einstellmittel in einem von außen zugänglichen Bereich angeordnet, so kann die Spieleinstellung erfolgen, ohne daß hierfür das gesamte Getriebe demontiert zu werden braucht. Als Einstellmittel kann aber auch eine Einstellmutter auf einem Einstellgewinde dienen.

Schließlich kann ein restliches verbliebenes Verzahnungsspiel eliminiert werden durch ein axial wirksames Federelement wie z. B. eine Wellscheibe oder eine Sternfeder, welches zwischen dem Planetenträger und dem Hohlrad mit konischem Verzahnungsbereich vorgesehen ist, dessen axiale Federkraft auf den Planetenträger in Richtung des sich verengenden Konus des Hohlrads mit konischem Verzahnungsbereich wirkt.

Die Erfindung wird anhand von Ausführungsbeispielen näher erläutert.

Es zeigen:
- Fig. 1: einen Längs-Schnitt einer Ausführungsform eines erfindungsgemäßen Planetengetriebes mit zylindrischem Sonnenrad und
- Fig. 2: einen Längs-Schnitt einer Ausführungsform eines erfindungsgemäßen Getriebes mit einem konisch verzahnten Sonnenrad.

Die hochtourig umlaufende Eingangswelle 2 treibt ein Sonnenrad 4 an. Das Sonnenrad 4 und die Eingangswelle 2 sind vorzugsweise einstückig hergestellt.

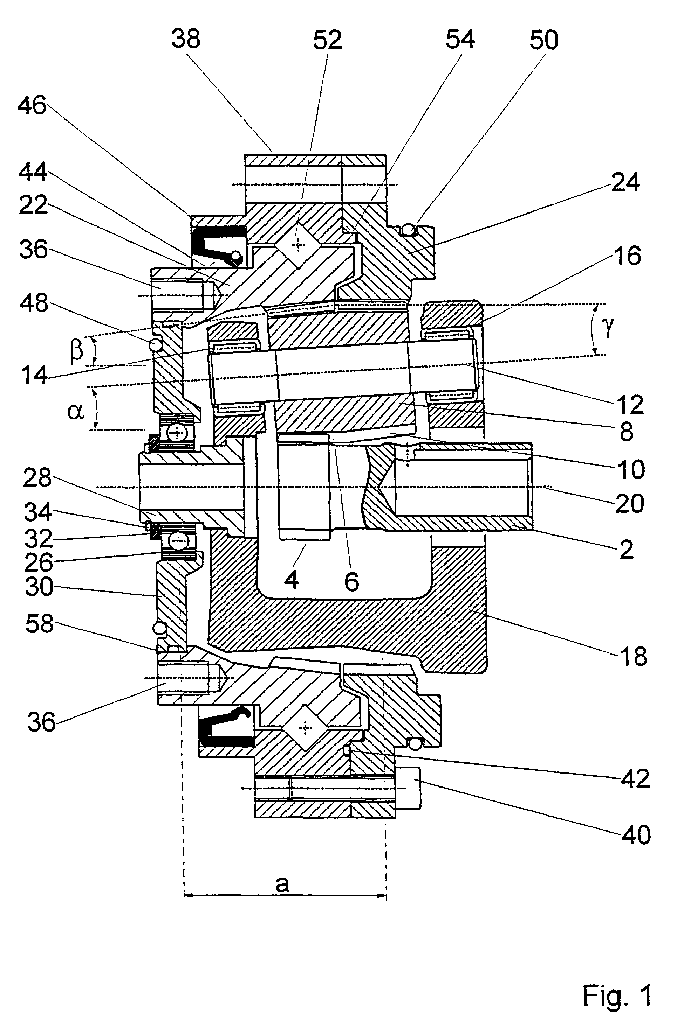

In der Ausführungsform nach Fig. 1 steht das Sonnenrad 4 in ständigem Zahneingriff mit ersten konischen Verzahnungsbereichen 6 mehrerer doppelkonischer Planetenräder 8. Jedes Planetenrad 8 wird durch einen zweiten konischen Verzahnungsbereich 10 vervollständigt. In der Zeichnung ist ein Planetenrad 8 abgebildet. Bevorzugt sind mindestens drei Planetenräder 8 vorgesehen.

Jeweils eine Planetenachse 12 ist über Lager 14 und 16, vorzugsweise Nadellager, in einem Planetenträger 18 drehbar, jedoch axial verschieblich, gelagert. Die Achse 12 ist um den Neigungswinkel α gegenüber der Getriebehauptachse 20 radial geneigt. Der Achsneigungswinkel der Planetenachsen liegt vorzugsweise im Bereich zwischen 2° und 7°.

Der erste konische Verzahnungsbereich 6 des Planetenrads 8 ist im Zahneingriff mit einem ersten Hohlrad 22. Der zweite konische Verzahnungsbereich 10 des Planetenrads 8 steht im Zahneingriff mit dem zweiten Hohlrad 24. Der Planetenträger 18 weist keine direkten Anschlußwellen auf, so daß an ihm selbst kein Drehmoment zu- oder abgeführt wird. Die Axialposition des Planetenträgers 18 gegenüber dem Hohlrad 22 mit konisch ausgebildeten Verzahnungsbereich ist über die Buchse 28, das als Kugellager ausgebildete Lager 26 und den Lagerflansch 30 festgelegt. Anstelle eines Kugellagers kann für das Planetenträgerlager beispielsweise auch ein Vierpunkt-Lager mit axialen und radialen Führungseigenschaften verwendet werden. Die Einstellung der Axialposition des Planetenträgers erfolgt mit Hilfe der Einstellscheibe 32, welche vom Sprengring 34 auf der Buchse 28 gehalten wird. Der Lagerinnenring des Lagers 26 ist axial außen in Kontakt mit der Einstellscheibe 32. Innen ist zu einem Absatz in der Buchse 28 axiales Spiel vorgesehen, welches so bemessen ist, daß auch eine dicke Einstellscheibe 32 montierbar ist. Die radiale Abstützung des Planetenträgers 18 erfolgt einerseits über das Lager 26 und andererseits über die Planetenräder 8, deren Radialpositionen ihrerseits von den Zahneingriffen mit den Hohlrädern 22, 24 bestimmt sind. Die Einstellscheibe ist von außen zugänglich, wodurch Einstellarbeiten wesentlich erleichtert werden.

Das Planetenträgerlager 26 ist auf der dem Hohlrad mit zylindrischen Verzahnungsbereich abgewandten Seite des Getriebes angeordnet. Der axiale Abstand a zwischen dem Planetenträgerlager und dem Hohlrad mit zylindrischen Verzahnungsbereich bildet eine Lagerbasis die unerwünschte Kippbewegungen des Planetenträgers abstützt.

Das zweite Hohlrad 24 ist feststehend angeordnet, während das erste Hohlrad 22 den Abtrieb bildet. Mehrere am Umfang verteilte Bohrungen 36 dienen zur Befestigung eines vom Getriebe anzutreibenden Elements wie z. B. eines Roboterarms. Ein ringförmiges Gehäuse 38 ist mit dem zweiten Hohlrad 24 über Befestigungselemente, hier Schrauben 40, fest verbunden. Der Bund 54 dient der radialen Zentrierung von Hohlrad 24 und Gehäuse 38. Geeignete Dichtungen, beispielsweise O-Ringe 42, gewährleisten eine dichte Verbindung zwischen dem Hohlrad 24 und dem Gehäuse 38. Zwischen dem Gehäuse 38 und einer zylindrischen Außenfläche 44 des Hohlrads 22 ist eine vorzugsweise als Radialwellendichtring 46 ausgebildete Dichtung vorgesehen. Die als O-Ringe ausgeführten Dichtungen 48 im Lagerflansch 30 einerseits und 50 im zweiten Hohlrad 24 andererseits dienen zur Abdichtung gegenüber nicht dargestellten Gehäuseteilen.

Das Hohlrad 22 ist über ein Wälzlager, das als Kreuzrollenlager 52 ausgebildet ist, im ringförmigen Gehäuse 38 drehbar und in Axialrichtung feststehend gelagert. Im Zusammenhang mit der Erfindung bieten sich dem Fachmann anstelle des Kreuzrollenlagers auch andere Lagerausführungen an. Beispielsweise könnten ein oder mehrere Kugellager oder - für Axial- und Radialwirkung getrennte Zylinderrollen - oder Nadellager vorgesehen werden.

Erfindungsgemäß ist der Verzahnungsbereich eines Hohlrads - in den dargestellten Ausführungsformen des feststehenden zweiten Hohlrads 24 - annähernd zylindrisch ausgebildet, während der Verzahnungsbereich des anderen Hohlrads - in den dargestellten Ausführungsformen des ersten Hohlrads 22 - konisch ausgebildet ist. Als annähernd zylindrisch wird ein Verzahnungsbereich eines Hohlrads im Zusammenhang mit der vorliegenden Erfindung auch dann noch verstanden, wenn der Wert des Konuswinkels dieses Hohlrads nicht mehr als 40 % des Werts des Achsneigungswinkels der Planetenachsen beträgt. Der Konuswinkel des anderen, konischen Hohlrads ist in diesem Fall im Verhältnis zum Achsneigungswinkel vorzugsweise deutlich größer.

Der Konuswinkel des Verzahnungsbereichs des ersten Hohlrads 22 gegenüber der Getriebehauptachse ist in der Zeichnung mit β bezeichnet. Der Konuswinkel γ des Verzahnungsbereichs 10 des Planetenrads 8, welcher mit dem zylindrischen Hohlrad 24 in Eingriff ist, entspricht in etwa dem Achsneigungswinkel α.

Die beiden konischen Verzahnungsbereiche des Planetenrads 8 weisen entgegengesetzte Konusrichtung auf. Axial ist das doppelkonische Planetenrad entlang seiner Planetenradachse 12 zwischen den beiden Hohlrädern 22, 24 geführt. Im Planetenträger 18 sind die Planetenräder 8 mittels der Nadellager 14, 16 mit deutlichem axialen Spiel von etwa 1,5 bis 3 mm gelagert, so daß ihre axiale Position allein durch die beiden Hohlräder bestimmt wird.

Den größten Einfluß auf die Übertragungstreue des Getriebes haben die Zahneingriffe der beiden Verzahnungsbereiche 6, 10 der Planetenräder 8 mit den beiden Hohlrädern 22, 24. Das Verzahnungsspiel dieser Zahneingriffe kann durch ein einziges Einstellelement, die Einstellscheibe 32, eingestellt werden. Zur Verkleinerung des Verzahnungsspiels wird eine dickere Einstellscheibe 32 gewählt. Kommt dabei der Verzahnungsbereich 6 des Planetenrads 8 an dem konischen Verzahnungsbereich des Hohlrads 22 zum Liegen, so wird das Planetenrad 8 entlang seiner radial geneigten Achse 12 so lange nach schräg außen in Richtung des zylindrischen Hohlrads 24 verschoben, bis auch ein Verzahnungsspiel zwischen dem Verzahnungsbereich 10 des Planetenrads 8 und dem zylindrischen Verzahnungsbereich des Hohlrads 24 den gewünschten kleinen Wert angenommen hat. Die Axialposition des Hohlrads 24 zum Hohlrad 22 hat keinen Einfluß auf das Verzahnungsspiel, so daß eine Einstellscheibe zwischen den beiden Hohlrädern nicht notwendig ist.

Wurden bei bisher bekannten Getrieben die beiden Hohlräder unbeabsichtigt mit radialem Mittenversatz montiert, so konnte das zu partiellen Klemmerscheinungen und/oder Bereichen großen Zahnspiels führen. Durch die axiale Beweglichkeit der Planetenräder 8 entlang ihrer Planetenachsen 12 können die Planeten axial aus Engstellen ausweichen, wenn in der gleichen Getriebestellung im jeweils anderen Hohlradeingriff mehr Zahnspiel gegeben ist. Ein radialer Mittenversatz beider Hohlräder führt also lediglich zu einer geringfügigen, die Übertragungspräzision des Getriebes nicht störenden zyklischen Axialbewegung der Planetenräder 8.

Um eine gleichmäßige Spielverteilung zwischen den beiden Zahneingriffen mit den Hohlrädern 22, 24 zu erreichen, sind die Konuswinkel der beiden Verzahnungsbereiche der Planetenräder so gewählt, daß die aus der Konizität herrührenden Axialkräfte im wesentlichen ausgeglichen sind. Aufgrund der unterschiedlichen Zähnezahlen der beiden Hohlräder sind die beiden Verzahnungsbereiche der Planetenräder mit deutlich unterschiedlichen Betriebseingriffswinkeln mit den Hohlradverzahnungen in Eingriff. Zwischen dem Verzahnungsbereich 6 des Planetenrads 8 und dem konischen Verzahnungsbereich des Hohlrads 22 herrscht ein deutlich größerer Betriebseingriffswinkel, so daß die bezüglich der Planetenradachse 12 normalgerichtete, radiale Verzahnungskraftkomponente deutlich größer ist als bei dem anderen Verzahnungsbereich 10, welcher mit dem Hohlrad 24 in Eingriff steht. Um ausgeglichene Axialkräfte auf die Planetenräder 8 zu erhalten, weist der Verzahnungsbereich 6, bei welchem der größere Betriebseingriffswinkel auftritt, einen kleineren Konuswinkel auf. Der größere Betriebseingriffswinkel tritt - gleichen Verzahnungsmodul vorausgesetzt - immer an dem Hohlrad 22 mit der kleineren Zähnezahl auf.

Darüber hinaus weisen beide Verzahnungsbereiche 6, 10 des Planetenrads 8 gleichen Richtungssinn und in etwa gleiche Steigungsmaße auf, so daß auch die aus der Schrägverzahnung herrührenden Axialkräfte auf das Planetenrad 8 im wesentlichen ausgeglichen sind.

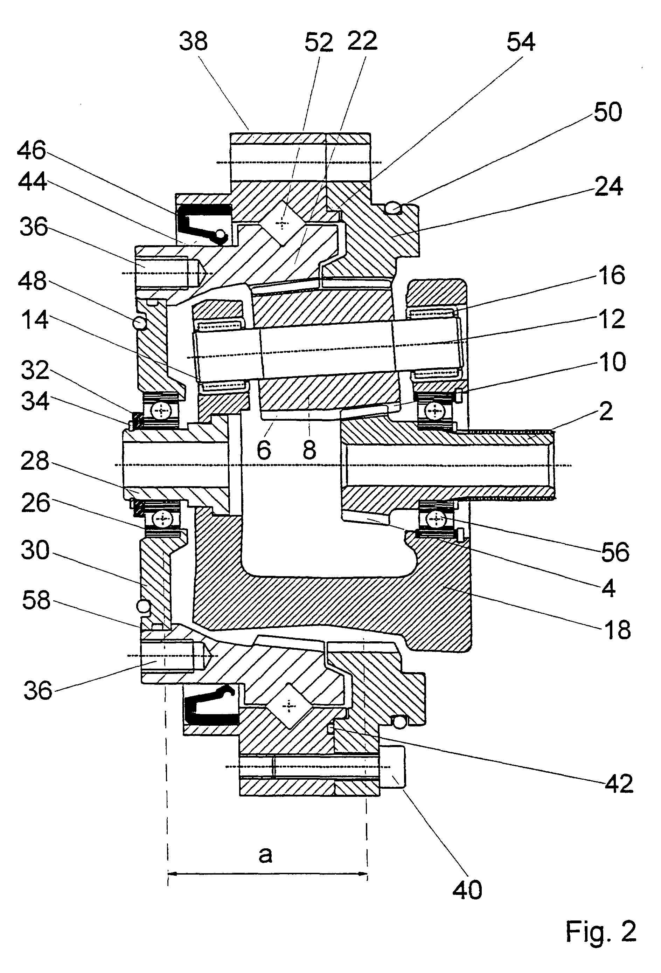

Der Achsneigungswinkel α entspricht in etwa dem Wert des Konuswinkels des gleichzeitig mit dem konischen Hohlrad 22 und dem Sonnenrad 4 in Eingriff stehenden konischen Verzahnungsbereichs 6 des Planetenrads 8. Im Eingriffspunkt mit dem Sonnenrad 4 verlaufen die Zahnflanken dieses Verzahnungsbereichs 6 des Planetenrads 8 annähernd parallel zur Getriebehauptachse 20. Daran angepaßt weist das Sonnenrad 4 einen zumindest annähernd zylindrischen Verzahnungsbereich auf. Die Ausführungsform nach Fig. 1 eignet sich besonders für eine Anbindung an einen Antriebsmotor, bei welcher die Antriebswelle 2 fest mit der (nicht dargestellten) Abtriebswelle eines Antriebsmotors verbunden ist. Geringe axiale Verschiebungen des Sonnenrads bleiben ohne Auswirkungen auf das Verzahnungsspiel. Demgegenüber ist in der Ausführungsform nach Fig. 2 ein Sonnenrad 4 mit konischem Verzahnungsbereich vorgesehen, welches in Eingriff mit dem Verzahnungsbereich 10 des Planetenrads 8 steht. Bei der Ausführungsform nach Fig. 2 ist die Axialposition des Sonnenrads 4 gegenüber dem Planetenträger 18 durch das Kugellager 56 festgelegt, wodurch auch das Verzahnungsspiel der Zahneingriffe mit dem Sonnenrad 4 bestimmt wird.

In beiden dargestellten Ausführungsformen gehen die Zahnflanken der Verzahnungsbereiche 6, 10 des Planetenrads 8 mit einem Knick, jedoch ohne Versatz, ineinander über. Dies wird dadurch erreicht, daß die beiden Verzahnungsbereiche 6, 10 des Planetenrads gleiche Zähnezahl und gleiche Moduln aufweisen, und daß die beiden Verzahnungsbereiche des Planetenrads hinsichtlich der effektiven Flankendurchmesser entsprechend aufeinander abgestimmt sind. Entsprechend der Verzahnungsbereiche 6, 10 des Planetenrads 8 weisen demgemäß auch die Verzahnungsbereiche der beiden Hohlräder 22, 24 gleiche Moduln auf. Das Hohlrad 24 mit zylindrischem Verzahnungsbereich weist hierbei eine geringfügig größere Zähnezahl auf als das Hohlrad 22, wodurch die Wolfrom-Übersetzung bestimmt wird.

Das Hohlrad 22 mit konischem Verzahnungsbereich weist eine große zentrale Öffnung 58 auf, in der der Lagerflansch 30 aufgenommen und fixiert ist. Das Planetenträgerlager 26, welches durch die resultierende Axialkraft auf den Planetenträger nur relativ gering belastet ist, weshalb ein klein bauendes, handelsübliches Kugellager verwendet werden kann, ist wiederum in dem Lagerflansch 30 aufgenommen.

An der Stelle der Einstellscheibe 32 oder zusätzlich zur Einstellscheibe 32 kann ein Federelement, z. B. eine Wellscheibe, vorgesehen sein, um ein möglicherweise verbliebenes Verzahnungsspiel zu eliminieren.

Im Zusammenhang mit der Erfindung kann der Planetenträger 18 anstelle über das innere Zentralrad (Sonnenrad 4) auch über andere, eine vergleichbare Vorübersetzung liefernde Räderanordnungen/-ketten, wie z. B. eine Kegelradstufe, angetrieben werden. Es ist ebenfalls möglich, Antrieb und Abtrieb zu vertauschen, wobei sich die Drehrichtung umkehrt und sich der Zahlenwert der Gesamtübersetzung geringfügig ändert.

### Bezugszeichen

- 2: Eingangswelle
- 4: Sonnenrad
- 6: konischer Verzahnungsbereich
- 8: Planetenrad
- 10: konischer Verzahnungsbereich
- 12: Planetenachse
- 14: Nadellager
- 16: Nadellager
- 18: Planetenträger
- 20: Getriebehauptachse
- 22: Hohlrad
- 24: Hohlrad
- 26: Planetenträgerlager
- 28: Buchse
- 30: Lagerflansch
- 32: Einstellscheibe
- 34: Sprengring
- 36: Befestigungsbohrung
- 38: Gehäuse
- 40: Schraube
- 42: O-Ring
- 44: Fläche
- 46: Radialwellendichtring
- 48: O-Ring
- 50: O-Ring
- 52: Kreuzrollenlager
- 54: Zentrierbund
- 56: Lager
- 58: Öffnung

## Patentansprüche

1. Planetengetriebe mit einem angetriebenen Sonnenrad (4), mit zwei innenverzahnten Hohlrädern (22, 24), von denen eines feststeht und das andere drehantreibbar gelagert ist und den Abtrieb bildet, und Planetenrädern (8), die auf Planetenradachsen (12) in einem Planetenträger (18) axial verschieblich gelagert sind und die einen ersten und einen zweiten konisch verzahnten Verzahnungsbereich (6, 10) aufweisen, wobei der erste Verzahnungsbereich (6) in ständigem Zahneingriff mit dem einen Hohlrad (24) steht, und der zweite Verzahnungsbereich (10) zum ersten Verzahnungsbereich entgegengesetzte Konusrichtung aufweist und in ständigem Zahneingriff mit dem anderen Hohlrad (22) steht, und wobei ein Verzahnungsbereich (6) der Planetenräder (8) in ständigem Zahneingriff mit dem Sonnenrad (4) steht, **dadurch gekennzeichnet, daß** der Verzahnungsbereich eines der Hohlräder (24) annähernd zylindrisch und der Verzahnungsbereich des anderen Hohlrads (22) konisch ausgebildet ist, daß die Planetenradachsen (12) um einen Achsneigungswinkel α geneigt verlaufen, daß ein zwischen dem Planetenträger (18) und dem Hohlrad (22) mit konischem Verzahnungsbereich axial wirksames Planetenträgerlager (26) vorgesehen ist, und daß die Axialposition des Planetenträgers (18) gegenüber dem Hohlrad (22) mit konischem Verzahnungsbereich einstellbar ist, um das Verzahnungsspiel der Verzahnungen beider Hohlräder (22, 24) gleichzeitig einzustellen.

2. Planetengetriebe nach Anspruch 1, **dadurch gekennzeichnet, daß** die Konuswinkel der beiden Verzahnungsbereiche (6, 10) der Planetenräder (8) so gewählt sind, daß die aus der Konizität herrührenden Axialkräfte auf die Planetenräder (8) im wesentlichen ausgeglichen sind.

3. Planetengetriebe nach Anspruch 1 oder 2, **dadurch gekennzeichnet, daß** die beiden Verzahnungsbereiche (6, 10) der Planetenräder (8) schrägverzahnt sind, gleichen Richtungssinn und etwa gleiche Steigungsmaße aufweisen, so daß die aus der Schrägverzahnung herrührenden Axialkräfte auf die Planetenräder (8) im wesentlichen ausgeglichen sind.

4. Planetengetriebe nach einem der Ansprüche 1 bis 3, **dadurch gekennzeichnet, daß** das Planetenträgerlager (26) in axialem Abstand vom Hohlrad (24) mit annähernd zylindrischen Verzahnungsbereich angeordnet ist.

5. Planetengetriebe nach einem der Ansprüche 1 bis 4, **dadurch gekennzeichnet, daß** der Verzahnungsbereich des den Abtrieb bildenden Hohlrads (24) konisch ausgebildet ist und der Verzahnungsbereich des feststehenden Hohlrads (22) annähernd zylindrisch ausgebildet ist.

6. Planetengetriebe nach einem der Ansprüche 1 bis 5, **dadurch gekennzeichnet, daß** der Achsneigungswinkel α in etwa dem Wert des Konuswinkels der gleichzeitig mit dem konischen Hohlrad (22) und dem Sonnenrad (4) in Eingriff stehenden konischen Verzahnungsbereiche (6) der Planetenräder (8) entspricht, so daß die Zahnflanken dieses Verzahnungsbereichs (6) der Planetenräder (8) im Eingriffspunkt mit dem Sonnenrad (4) annähernd parallel zu einer Getriebehauptachse (20) verlaufen, und daß das Sonnenrad (4) einen zumindest annähernd zylindrischen Verzahnungsbereich aufweist.

7. Planetengetriebe nach einem der Ansprüche 1 bis 6, **dadurch gekennzeichnet, daß** die Verzahnungen der beiden Hohlräder (22, 24) und die Verzahnungsbereiche (6, 10) der Planetenräder (8) gleiche Moduln aufweisen, daß die Hohlräder eine geringfügig unterschiedliche Zähnezahl aufweisen, und daß die beiden Verzahnungsbereiche (6, 10) der Planetenräder hinsichtlich der effektiven Flankendurchmesser so aufeinander abgestimmt sind, daß die Zahnflanken der Verzahnungsbereiche (6, 10) der Planetenräder (8) ohne Versatz ineinander übergehen.

8. Planetengetriebe nach Anspruch 7, **dadurch gekennzeichnet, daß** das Hohlrad (24) mit annähernd zylindrischem Verzahnungsbereich die größere Zähnezahl aufweist.

9. Planetengetriebe nach einem der Ansprüche 1 bis 8, **dadurch gekennzeichnet, daß** das Hohlrad (22) mit konischem Verzahnungsbereich eine große zentrale Öffnung (58) aufweist.

10. Planetengetriebe nach einem der Ansprüche 1 bis 9, **dadurch gekennzeichnet, daß** die Öffnung (58) einen Lagerflansch (30) aufnimmt in welchem das Planetenträgerlager (26) vorgesehen ist.

11. Planetengetriebe nach einem der Ansprüche 1 bis 10, **dadurch gekennzeichnet, daß** zur Veränderung der Axialposition des Planetenträgers (18) am Planetenträgerlager (26) ein Einstellmittel (32) vorgesehen ist, welches in einem von außen zugänglichen Bereich angeordnet ist.

12. Planetengetriebe nach einem der Ansprüche 1 bis 11, **dadurch gekennzeichnet, daß** ein zwischen dem Planetenträger (18) und dem Hohlrad (22) mit konischem Verzahnungsbereich axial wirksames Federelement vorgesehen ist, dessen axiale Federkraft auf den Planetenträger in Richtung des sich verengenden Konus des Hohlrads mit konischem Verzahnungsbereich wirkt, um ein Verzahnungsspiel zu eliminieren.

## Claims

1. Planetary gear comprising a driven sun gear (4) provided with two internal toothed ring gears (22, 24), of which one is fixed and the other is mounted in a rotationally displaceable manner and forms the output, and planet gears (8) which are mounted in an axially displaceable manner on planet gear axes (12) in a planet carrier (18) and which comprise a first and a second conically toothed geared area (6, 10), the first geared area (6) being in constant mesh with the one ring gear (24) and the second geared area (10) having a conical direction opposed to the first geared area and being in constant mesh with the other ring gear (22), one geared area (6) of the planet gears (8) being in constant mesh with the sun gear (4), **characterized in that** the geared area of one ring gear (24) is nearly cylindrical and the geared area of the other ring gear (22) is conical, **in that** the planet gear axes (12) are inclined at an angle of inclination (∝) of the axis, **in that** an axially effective planet carrier bearing (26) is provided between the planet carrier (18) and the ring gear (22) with conical geared area and **in that** the axial position of the planet carrier (18) can be adjusted with regard to the ring gear (22) with conical geared area in order to simultaneously adjust the backlash of the teeth of both ring gears (22, 24).

2. Planetary gear according to claim 1, **characterized in that** the cone angles of the two geared areas (6, 10) of the planet gears (8) are selected so that axial forces on the planet gears (8) due to the taper are essentially equalized.

3. Planetary gear according to claim 1 or 2, **characterized in that** the two geared areas (6, 10) of the planet gears (8) are helically cut, have the same sense of direction and have approximately the same inclination angle so that the axial forces on the planet gears (8) due to the helical teeth are essentially equalized.

4. Planetary gear according to one of the claims 1 to 3, **characterized in that** the planet carrier bearing (26) is axially spaced with regard to the ring gear (24) with nearly cylindrical geared area.

5. Planetary gear according to one of the claims 1 to 4, **characterized in that** the geared area of the ring gear (24) which forms the output is conical and the geared area of the fixed ring gear (22) is nearly cylindrical.

6. Planetary gear according to one of the claims 1 to 5, **characterized in that** the angle of inclination (α) is approximately equivalent to the value of the cone angle of the conical geared areas (6) of the planet gears (8) which are simultaneously in mesh with the conical ring gear (22) and the sun gear (4), so that the tooth flanks of this geared area (6) of the planet gears (8) are nearly parallel to a gear main axis (20) at the meshing point with the sun gear (4), and **in that** the sun gear (4) has a geared area which is at least nearly cylindrical.

7. Planetary gear according to one of the claims 1 to 6, **characterized in that** the teeth of the two ring gears (22, 24) and the geared areas (6, 10) of the planet gears (8) have the same modules, **in that** the ring gears have a slightly different number of teeth and **in that** the two geared areas (6, 10) of the planet gears are matched with each other with regard to the effective flank diameter so that the tooth flanks of the geared areas (6, 10) of the planet gears (8) go into each other without misalignment.

8. Planetary gear according to claim 7, **characterized in that** the ring gear (24) with nearly cylindrical geared area has the larger number of teeth.

9. Planetary gear according to one of the claims 1 to 8, **characterized in that** the ring gear (22) with conical geared area has a large central opening (58).

10. Planetary gear according to one of the claims 1 to 9, **characterized in that** the opening (58) holds a support flange (30) in which the planet carrier bearing (26) is provided.

11. Planetary gear according to one of the claims 1 to 10, **characterized in that** a means of adjustment (32) which is arranged in an area accessible from outside is provided for changing the axial position of the planet carrier (18) on the planet carrier bearing (26)

12. Planetary gear according to one of the claims 1 to 11, **characterized in that** an axially effective spring element is provided between the planet carrier (18) and the ring gear (22) with conical geared area, the axial spring force of said spring element acting on the planet carrier in the direction of the narrowing cone of the ring gear with conical geared area in order to eliminate backlash.

## Revendications

1. Boîte epicycloïdale dotée d'une roue solaire (4) menée, de deux couronnes à denture interne (22, 24), dont l'une est fixe et l'autre est logée de façon pivotante et formant la sortie de la boîte vitesses, et de satellites (8) logés sur des axes de satellites (12) dans un arbre porte-satellites (18) de manière à ce qu'ils peuvent être déplacés axialement et comportant une première et une deuxième zones dentées coniques (6, 10), sachant que la première zone dentée (6) est en prise permanente avec la couronne (24) et sachant que la direction du cône de la deuxième zone dentée (10) est opposée à celle de la première zone dentée et que la deuxième zone dentée est en prise permanente avec l'autre couronne (22), et sachant qu'une zone dentée (6) des satellites (8) est en prise permanente avec la roue solaire (4), **caractérisée en ce que** la zone dentée de l'une des couronnes (24) a une forme quasi cylindrique et **en ce que** la zone dentée de l'autre couronne (22) a une forme conique, **en ce que** les axes des satellites (12) sont inclinés d'un angle d'inclinaison a, **en ce que** entre l'arbre porte-satellites (18) et la couronne (22) comportant une zone dentée conique est prévu un palier d'arbre porte-satellites (26) agissant en sens axial, et **en ce que** la position axiale de l'arbre porte-satellites (18) par rapport à la couronne (22) dotée d'une zone dentée conique est ajustable, afin de pouvoir régler simultanément les jeux des dentures des deux couronnes (22, 24).

2. Boîte epicycloïdale selon la revendication 1, **caractérisée en ce que** les angles des cônes des deux zones dentées (6, 10) des satellites (8) sont choisis de manière à ce que la force axiale exercée sur les satellites (8) et résultante de la conicité est essentiellement compensée.

3. Boîte epicycloïdale selon une des revendications 1 ou 2, **caractérisée en ce que** les deux zones dentées (6, 10) des satellites (8) sont conçues à denture hélicoïdale, **en ce qu'**elles ont le même sens de rotation et **en ce qu'**elles ont à peu près les mêmes angles d'inclinaison, pour que la force axiale exercée sur les satellites (8) et issue de la denture hélicoïdale soit essentiellement compensée.

4. Boîte epicycloïdale selon une des revendications 1 à 3, **caractérisée en ce que** le palier de l'arbre porte-satellites (26) est disposé à une certaine distance en sens axial par rapport à la couronne (24) comportant une zone dentée quasi cylindrique.

5. Boîte epicycloïdale selon une des revendications 1 à 4, **caractérisée en ce que** la zone dentée de la couronne (24) formant la sortie de la boîte de vitesses a une forme conique et **en ce que** la zone dentée de la couronne fixe (22) a une forme quasi cylindrique.

6. Boîte epicycloïdale selon une des revendications 1 à 5, **caractérisée en ce que** l'angle d'inclinaison de l'axe a correspond à peu prés à la valeur de l'angle du cône des zones dentées (6) coniques des satellites (8) qui engrènent simultanément avec la couronne conique (22) et la roue solaire (4), pour que les flancs des dents de cette zone dentée (6) des satellites (8) soient - au niveau du point d'engrènement avec la roue solaire (4) - à peu près parallèles par rapport à un axe principal de la boîte de vitesses (20), autour duquel la roue solaire (4) comporte une zone dentée au moins quasi cylindrique.

7. Boîte epicycloïdale selon une des revendications 1 à 6, **caractérisée en ce que** les dentures des deux couronnes (22, 24) et les zones dentées (6, 10) des satellites (8) comportent des modules identiques, **en ce que** les couronnes ont un nombre de dents légèrement différent, et **en ce que** les deux zones dentées (6, 10) des satellites sont - en ce qui concerne les diamètres sur flancs effectifs - ajustées l'une par rapport à l'autre - de façon à ce que les flancs des dents des zones dentées (6, 10) des satellites (8) engrènent sans déport.

8. Boîte epicycloïdale selon la revendication 7, **caractérisée en ce que** la couronne (24) avec une zone dentée quasi cylindrique comporte un nombre majeur de dents.

9. Boîte epicycloïdale selon une des revendications 1 à 8, **caractérisée en ce que** la couronne (22) avec une zone dentée conique comporte un grand orifice central (58).

10. Boîte epicycloïdale selon une des revendications 1 à 9, **caractérisée en ce que** dans l'orifice (58) est logé une bride de palier (30), dans laquelle est monté le palier de l'arbre porte-satellites (26).

11. Boîte epicycloïdale selon une des revendications 1 à 10, **caractérisée en ce que** pour la variation de la position de l'arbre porte-satellites (18) sur le palier de l'arbre porte-satellites (26) en sens axial est prévu un élément de calage (32) disposé dans une zone accessible par l'extérieur.

12. Boîte epicycloïdale selon une des revendications 1 à 11, **caractérisée en ce que** est prévu un élément à ressort agissant en sens axial et disposé entre l'arbre porte-satellites (18) et la couronne (22) ayant une zone dentée conique, dont la force élastique axiale agit sur l'arbre porte-satellites en direction du cône s'étranglant de la couronne ayant une zone dentée conique, afin de pouvoir éliminer tout jeu de denture.
